# EUROPEAN PATENT APPLICATION

(11) **EP 4 642 095 A1**
(43) Date of publication of application: **29.10.2025**
(21) Application number: 25171797.1
(22) Date of filing: 22.04.2025
(51) Int. Cl.: H04W 36/00, H04W 88/08

(54) **OFFSET CLUSTERS**

(30) Priority: 24.04.2024 GB 202405743
(71) Applicant: IONX Networks Limited, Marlow, Buckinghamshire SL7 1EY (GB)
(72) Inventor: FAIRWEATHER, Kenneth James, Buckinghamshire, SL7 1EY (GB); PERSAUD, Marlon Peter, Buckinghamshire, SL7 1EY (GB)
(74) Representative: D Young & Co LLP

(57) **Abstract**

A telecommunication radio device arrangement for linear deployments comprising: a plurality of radio devices for providing a plurality of user device groups with connectivity to one or more telecommunication networks, each user device group comprising one or more user devices; and for each user device group of the plurality of user device groups, the arrangement comprises: a first cluster comprising radio devices from the plurality of radio devices; a second cluster of radio devices comprising radio devices from the plurality of radio devices; and a boundary between the first cluster and second cluster where a handover process is performable to transfer connectivity of user devices from the first cluster to the second cluster, wherein the boundaries for different user device groups are physically offset from each other.

## Description

### Technical Field and Background

The present disclosure relates to telecommunication networks and in particular handover processes in telecommunication networks, such as Multiple Network Operator (MNO) networks or Neutral Host (NH) networks which combines multiple MNO and/or private networks. More particularly, but not exclusively, described herein is a radio device arrangement and method that staggers handover processes between different user device groups.

Recently, the number of network-connected user devices has been increasing, which in turn increases the demand on mobile networks to provide high levels of network performance with minimal signal and connectivity issues. In order to support the increased number of connected user devices and meet the increased demand, increased network infrastructure and computing capacity has been deployed.

At least certain embodiments of the present disclosure address one or more of these problems as set out above.

### Summary

Aspects of the invention are set out in the accompanying claims.

Viewed from a first aspect, there is a provided a telecommunication radio device arrangement for linear deployments comprising: a plurality of radio devices for providing a plurality of user device groups with connectivity to one or more telecommunication networks, each user device group comprising one or more user devices; and for each user device group of the plurality of user device groups, the arrangement comprises: a first cluster comprising radio devices from the plurality of radio devices; a second cluster of radio devices comprising radio devices from the plurality of radio devices; and a boundary between the first cluster and second cluster where a handover process is performable to transfer connectivity of user devices from the first cluster to the second cluster, wherein the boundaries for different user device groups are physically offset from each other.

The present inventors have identified that, particularly for linear deployments, when there is relative motion between a number of user devices and the radio devices (for example when a number of user devices are travelling together in a certain direction), the majority of these user devices may participate in a handover process between radio clusters at substantially the same time. This can be caused by the user devices crossing a boundary between clusters of radio devices as a result of the user devices travelling along a railway (e.g. a train carriage with a large number of user devices travelling together), or a roadway (e.g. a bus with a large number of user devices travelling together). Other examples are discussed further below.

Handover processes require a certain amount of computing resources to be performed, and thus, when a large number of user devices all attempt to perform handover processes at substantially the same time, an increased demand is placed on the network infrastructure and computing resources supporting the network to facilitate the concurrent handover. This can result in requiring increased computing resources or network infrastructure to support the increased demand, or a reduction in the quality of service experienced by the user devices, such as temporary drop-outs or connectivity failures.

Thus, the present arrangement provides an approach whereby boundaries between clusters of radio devices for different user device groups are physically offset from each other within the radio device arrangement. As a result, the different user device groups will participate in handover processes at different, staggered, times, thereby reducing the maximum peak handover rate. Consequently, the amount of control and signalling required for handover at any given time is also reduced. This provides a number of advantages. For example, the network infrastructure and computing resources required to support the network can be reduced as the peak handover rate is reduced, resulting in reduced complexity, reduced power consumption, reduced processing requirements, and reduced cost. Furthermore, the scalability of the network and computing infrastructure is increased as the amount of computing resource required for a given radio device arrangement can be reduced.

As mentioned above, the present approach is particularly well-suited to linear radio device deployments such as radio devices arranged along a railway, roadway, air corridor, beach front, etc., where large numbers of user devices may be travelling in the same direction and in a relatively confined area resulting in a particularly high peak handover rate.

In some examples, the same radio device is included in both a first cluster for a first user device group and a second cluster for a second user device group. Thus, as explained above, the first and second user device groups experience the handover process in a staggered manner, and at different times.

In some examples, the plurality of radio devices may be linearly arranged within the telecommunication radio device arrangement.

In some examples, the telecommunication radio device arrangement may be an MNO radio device arrangement, for example a multi-MNO radio device arrangement capable of supporting multiple MNOs. In some examples, the plurality of radio devices is configured in use to provide the plurality of user device groups with connectivity to one or more MNO networks (and/or NH networks).

In some examples, each radio device in a given cluster is operable to be scheduled by a same scheduling device. Thus, in this example, when a user device transfers between different radio devices within the same cluster, for example as a user device traverses along a railway or roadway, the radio devices are still scheduled by the same scheduler device and so no formal or standard mobile telephony handover process is required (such as a 3GPP handover process). For example, while in some cases the scheduler may perform processing to decide which radio device/TRP should be scheduled for each user device when a user device transfers between radio devices/TRPs within the same cluster, the user device itself and upper levels of the telecommunications stack are unaware of this process (in contrast to when a 3GPP handover process or standard mobile handover process is performed). It will therefore be appreciated in these examples that the inevitable processing performed by the scheduler when a user device transfers between different radio devices within the same cluster is not considered a handover process.

In some examples, the handover process (such as a 3GPP handover process) is required when a user device transfers connectivity between clusters that are scheduled by different scheduling instances. In contrast to the example described above of transferring between radio devices within the same cluster, in this case when transferring between radio devices of different clusters, a handover process is required and thus the user device (and in some examples the upper levels of the telecommunications stack) is aware of the process. The handover process may comprise a 3GPP handover process or a standard mobile telephony handover process.

In some examples, the scheduling devices are remote from the radio device arrangement and connected thereto by a network connection. Thus, in these examples, the number and processing resources allocated to the scheduling instances can be efficiently modified depending on demand. Furthermore, such an arrangement decreases the complexity of the radio device arrangements themselves, increasing ease of real-world deployment and maintenance. Further, the scheduling instances may be provided as part of one or more cloud computing servers, thereby increasing the scalability of the network.

In some examples, the handover process comprises changing between scheduling devices, each scheduling device operable to schedule operation of the plurality of radio devices in a given cluster. In some examples, the handover process comprises a standard mobile telephony handover process, such as a 3GPP handover process or another handover process recognised by a standards body (such as 802.16m or CDMA-2000).

In some examples, connectivity between a user device and each radio device within a given associated cluster is transferable without performing a 3GPP handover process. As discussed above, such handover processes may only be required between cluster boundaries (i.e. where a user device is to transfer between a first cluster to a second cluster due to relative movement of the user device and the first and second clusters).

In some examples, the clusters comprise at least two clusters having a different number of radio devices. The present inventors have identified that having a different number of radio devices between different clusters may be particularly well-suited for certain real-world deployments. For example, the different number may arise as a result of physically offsetting the boundaries for different user device groups. Further, this arrangement may be particularly well-suited for radio device arrangements at peripheries of deployments.

In some examples, for a first user device group, each cluster has the same number of radio devices, and for a second user group, each cluster has a different number of radio devices. Again, such an arrangement may be particularly advantageous for some deployments and thus the configurability of the approach is increased and may be optimised depending on specific implementation.

In some examples, the plurality of radio devices forms a Co-operative Multi-Point deployment. As a result, radio devices can be clustered together in order to share resources, particularly computing resources that support the scheduling devices (also referred to as scheduling instances, for example in a virtualisation environment). This advantageously reduces the amount of computing resources required to support the deployment, also resulting in reduced complexity, energy usage, and cost. Herein, radio devices may also be referred to as transmission/reception points (TRPs).

In some examples, each user device group of the plurality of user device groups is associated with a different MNO (Mobile Network Operator). Thus, handover procedures may be staggered between users of different MNOs. The number of user groups is not particularly limited. For example, the radio device arrangement may support three or four or more user groups and thus MNOs at a given time. User device groups may be defined based on the MNO being used by the user device. In examples, the more user groups/MNOs supported, the higher the peak handover rate could be at any given time, and thus the greater the benefit of the present approach at reducing this peak handover rate.

In some examples, each user device group of the plurality of user device groups is associated with a different telecommunications network. Thus, handover procedures may be staggered between users of different telecommunications networks. The number of user groups is not particularly limited. For example, the radio device arrangement may support three or four or more user groups and thus different telecommunications networks at a given time. User device groups may be defined based on the telecommunications network being used by the user device. In examples, the more user groups/telecommunications networks supported, the higher the peak handover rate could be at any given time, and thus the greater the benefit of the present approach at reducing this peak handover rate.

In some examples, each user device group of the plurality of user device groups is associated with a different frequency band of the plurality of radio devices. For example, the radio devices may be configured to support a plurality of frequency bands (such as three or four or more). User device groups may be defined based on the frequency band to which the user device is connected, and thus handover may be staggered between the different frequency bands.

In some examples, each radio device provides connectivity via a plurality of frequency bands, such as three or more frequency bands. The present inventors have identified that these arrangements provide an advantageous balance of economy and connectivity capability.

In some examples, the plurality of radio devices comprise eight or more radio devices. In some examples, the plurality of radio devices comprise 16 radio devices. Again, the present inventors have identified that these arrangements provide an advantageous balance of economy and connectivity capability.

As discussed above, the present approach is particularly well-suited to linear deployments. In some examples, linear deployments comprise a railway, a roadway, an air corridor (such as an air-to-ground linear deployment), and/or a beach front. The benefits of the present approach apply to other linear deployments and non-linear deployments and this is not particularly limited.

While movement of user devices relative to the radio devices has been discussed, the present approach applies equally to any form of relative motion between the user devices and the radio devices. Thus, in some examples, the plurality of radio devices is configured to perform direct to cell communication from one or more low Earth orbit satellites or one or more high-altitude platform stations. In other words, in some examples, the present approach may apply where the radio devices are moving and the user devices are (relatively in comparison) stationary.

Viewed from a second aspect, there is provided a system comprising a plurality of telecommunication radio device arrangements according to any of the examples described herein, for example arranged in a linear deployment; and a plurality of scheduling devices operable to schedule operation of the radio devices of the plurality of telecommunication radio device arrangements. In some examples, the system further comprises a centralised controller as discussed herein.

In some examples, the plurality of scheduling devices are remote from the plurality of telecommunication radio device arrangements and connected thereto by a network connection. Thus, in these examples, the number and processing resources allocated to the scheduling instances can be efficiently modified depending on demand. Furthermore, such an arrangement decreases the complexity of the radio device arrangements themselves, increasing ease of real-world deployment and maintenance. Further, the scheduling instances may be provided as part of one or more cloud computing servers, thereby increasing the scalability of the network.

In some examples, the plurality of telecommunication radio device arrangements is arranged along one of: a railway; a road; an air corridor; and a beach front. The benefits of the present approach apply to other linear deployments and non-linear deployments and this is not particularly limited. Indeed, as discussed above, in some examples the plurality of radio devices is configured to perform direct to cell communication from one or more low Earth orbit satellites or one or more high-altitude platform stations.

Viewed from a third aspect, there is provided a computer-implemented method for performing handover by a telecommunication radio device arrangement according to any of the examples described herein, the method comprising: at a first time and for a first group of user devices, performing a handover process to transfer connectivity from a first cluster of radio devices to a second cluster of radio devices; at a second, later, time and for a second group of user devices, performing a handover process to transfer connectivity from a third cluster of radio devices to a fourth cluster of radio devices.

Thus, handover between different user device groups can be temporally staggered to reduce the peak handover rate. This temporal staggering can be realised with physical offsetting of the cluster boundaries. As discussed above, this provides a number of advantages. For example, the network infrastructure and computing resources required to support the network can be reduced as the peak handover rate is reduced, resulting in reduced complexity, reduced power consumption, reduced processing requirements, and reduced cost. Furthermore, the scalability of the network and computing infrastructure is increased as the amount of computing resource required for a given radio device arrangement can be reduced.

Viewed from a fourth aspect, there is provided a computer-readable storage medium comprising instructions which, when executed by one or more processors, cause the one or more processors to perform any of the methods described herein.

Other aspects will also become apparent upon review of the present disclosure, in particular upon review of the Brief Description of the Drawings, Detailed Description and Claims sections.

### Brief Description of the Drawings

Examples of the disclosure will now be described, by way of example only, with reference to the accompanying drawings in which:
Figure 1: schematically illustrates an example telecommunications network in which teachings of the disclosure can be implemented.
Figure 2: schematically illustrates a comparative example in which the teachings of the disclosure are not implemented.
Figure 3: illustrates an example relationship between number of handovers and time for the comparative example described in relation to figure 2.
Figure 4: schematically illustrates a telecommunication radio device arrangement according to the teachings of the disclosure.
Figure 5: schematically illustrates an example according to the teachings of the disclosure.
Figure 6: illustrates an example relationship between number of handovers and time for the example described in relation to figure 5.
Figure 7: schematically illustrates a method for performing handover according to the teachings of the disclosure.
Figure 8: schematically illustrates an example of an electronic device which can be used to implement teachings of the disclosure.

While the disclosure is susceptible to various modifications and alternative forms, specific example approaches are shown by way of example in the drawings and are herein described in detail. It should be understood however that the drawings and detailed description attached hereto are not intended to limit the disclosure to the particular form disclosed but rather the disclosure is to cover all modifications, equivalents and alternatives falling within the spirit and scope of the claimed invention.

It will be recognised that the features of the above-described examples of the disclosure can conveniently and interchangeably be used in any suitable combination.

### Detailed Description

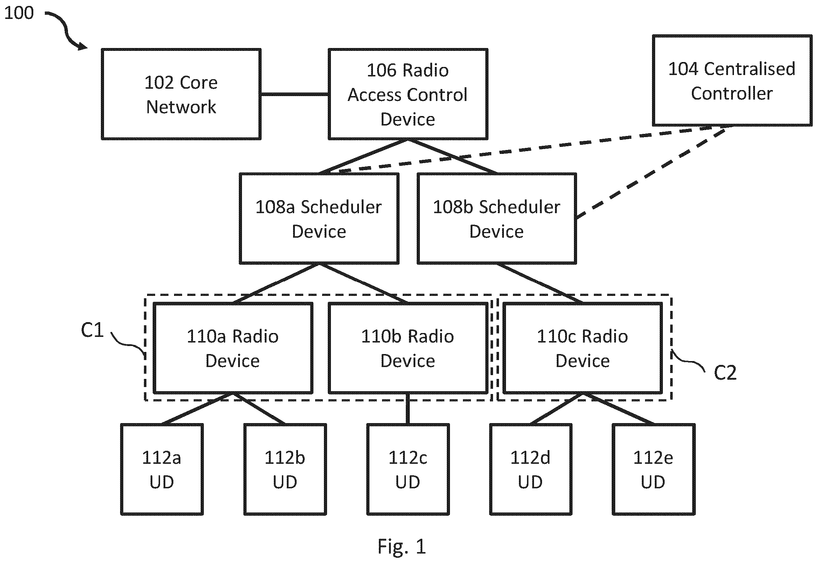

Figure 1 shows an example telecommunications network 100 in which teachings of the present disclosure can be implemented.

As shown in figure 1, telecommunications network 100 includes a core network 102, a centralised controller 104, a radio access control device 106, scheduler devices 108a and 108b, radio devices 110a, 110b, and 110c, and user devices 112a, 112b, 112c, 112d, and 112e. Network connections between the various devices are shown by solid lines. It will be appreciated that each network connection depicted in figure 1 can represent a direct network link but also a network connection through a plurality of links through one or more intermediate devices or nodes. The dashed lines associated with the centralised controller 104 represent logical paths between the centralised controller 104 and the scheduler devices 108a, 108b by which the centralised controller 104 can provided updated scheduling capacities for the radio devices 110a, 110b, 110c to the scheduler devices 108a, 108b.

It will be appreciated that centralised controller 104 may be a single dedicated device located somewhere in the telecommunications network 100, combined with one or more of the other network devices, distributed across a plurality of dedicated/shared devices and/or be hosted in the cloud. The exact network path between the centralised controller 104 and the scheduler devices 108a, 108b is omitted for clarity. It will be appreciated that the specific number and layout of devices is merely an example useful for illustrating a telecommunications network in which the teachings of the disclosure can be implemented. It will be further appreciated that while the devices in figure 1 are shown as separate devices, in other examples one or more of these devices may be combined and/or co-located. For example, one or more scheduler devices and one or more radio devices may be combined into one device, thereby reducing latency and allowing for the sharing of hardware. In other examples, the one or more scheduler devices and one or more radio devices may be provided in separate devices or remote from each other, thereby allowing for disaggregation of functionally which can increase efficiency, e.g. by avoiding redundant capacity for higher-level functionality and for allowing virtualisation (for example of one or more scheduler devices). Similarly, the radio access control device can be provided in the same device as one or more scheduler devices or may be provided as a separate device.

As shown in figure 1, telecommunications network 100 is a Co-ordinated Multi Point (CoMP) cellular deployment. In particular, individual radio devices 110 (also referred to herein as transmission/reception points (TRPs)) are clustered together into a coordinated group, acting as a single, larger cluster/cell, as shown by C1 and C2 and their respective dashed boxed around radio devices 110a and 110b, and radio device 110c (additional radio devices are omitted for clarity), respectively. It will be appreciated that each cluster may comprise two or more radio devices. In this way, radio devices may be clustered together to share network resources. A single scheduler device is then used for the whole cluster/cell, and different scheduler devices are used for each cluster of radio devices. Again, as shown in figure 1, C1 comprises radio devices 110a and 110b and these radio devices are operable to be scheduled by scheduler device 108a, and C2 comprises radio device 110a which is operable to be scheduled by scheduler device 108b. Examples of CoMP network topologies include ORAN Split 6 and Split 7.x.

The radio devices 110 may be part of different clusters at any given time. For example, a given radio device may form part of a first cluster for a user device in a first user device group and scheduled by a first scheduler device, while simultaneously forming part of a different cluster for a user in a different user device group and scheduled by a different scheduler. In some examples, the different user groups are associated with different telecommunications networks or mobile network operators. Thus, in other words, user devices of a first MNO (or first telecommunications network) may experience a cluster boundary at different points compared to user devices of other MNOs (or other telecommunications networks). In other examples, the different user groups may be associated with a different frequency band of the radio devices, and similarly, user device associated with a first frequency band may experience a cluster boundary at a different point compared to user devices associated with other frequency bands.

The allocation of radio devices 110 to clusters may be determined by the scheduler devices 108, or by the centralised controller 104, or by a combination of the scheduler devices 108 and centralised controller 104. For example, the centralised controller 104 may signal a scheduler device to adopt or remove a given radio device from its cluster of radio devices, thereby controlling the allocation of radio devices and clusters.

As shown in figure 1, cluster C1 includes two radio devices and cluster C2 includes one radio device. It will be appreciated that the number of radio devices in a given cluster can vary and is not particularly limited. In some examples, the clusters comprise at least two clusters having a different number of radio devices. The present inventors have identified that having a different number of radio devices between different clusters may be particularly well-suited for certain real-world deployments. For example, the different number may arise as a result of physically offsetting the boundaries for different user device groups. Further, this arrangement may be particularly well-suited for radio device arrangements at peripheries of deployments.

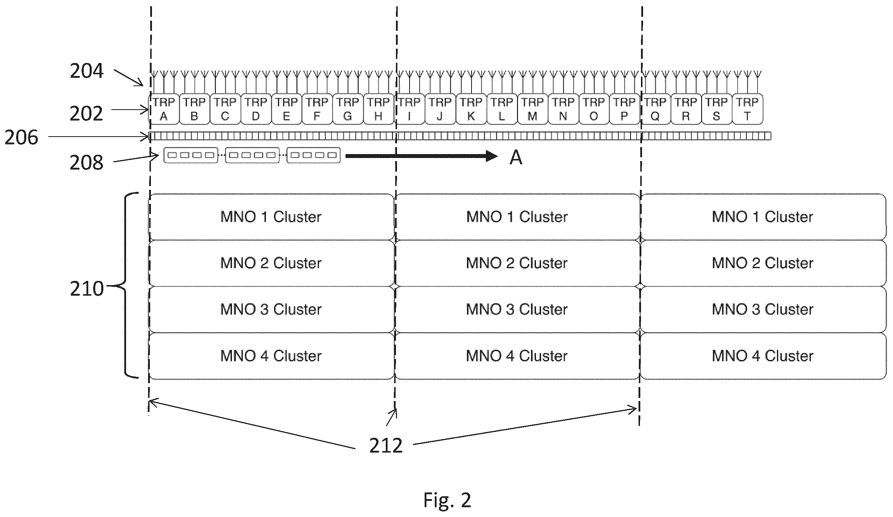

Further, in CoMP, as discussed, a single scheduler may operate to schedule radio communication for all radio devices (i.e. TRPs) in the cluster associated with that single scheduler device. As a result, when a user device changes connectivity from a first radio device in a cluster to a second radio device in that cluster, because the same scheduler device operates to schedule both radio devices, a handover process (such as a 3GPP or standard mobile telephony handover process) is not performed (as discussed above). However, when a radio device changes connectivity from a radio device in a cluster to a radio device in a different cluster (for example due to relative motion between the user device and the radio devices), i.e. at a cluster boundary, because the radio devices are not scheduled by the same scheduler device, a handover process is performed. This handover process may be a handover process conforming to one or more standards (as regulated by a standards body), such as a 3GPP handover process. The cluster boundaries and associated handover is discussed in more detail further below in relation to figures 2 to 7.

The relative motion between user devices and radio devices may be caused, as discussed herein, by user devices being present on a train moving along a railway or in a number of vehicles on a roadway, or in a plane transiting an air-corridor, or on a ship transiting a passage of water, or being present on a beachfront, etc. In some cases, the relative motion may be caused by the radio devices themselves moving relative to substantially stationary user devices, such as in the case of radio devices being present on a low Earth orbit satellite or one or more high-altitude platform stations. In either case, the present approach may apply. In other words, the present approach is not limited to linear deployments such as railways or roadways but the present approach actually applies to various examples where there is relative motion between user devices and the radio devices.

The centralised controller 104 can include a Radio Access Network Intelligent Controller (RIC), and thereby act to optimise and manage radio resources in a Radio Access Network (RAN). Further, it can operate as part of a 5G network and/or as part of an Open RAN network. In some examples, the centralised controller can operate in accordance with one or more standards, for example from 3GPP, ITU, O-RAN ALLIANCE and/or Small Cell Forum. Thereby interoperability with other devices and networks can be ensured.

The telecommunications network can comprise a radio access control device 106, the radio access control device being operable to manage access control for one or more devices in the telecommunication network. It will be appreciated that the radio access control device 106 can be present or omitted, and in some cases may be combined with the centralised controller 104. In some examples, the radio access control device comprises a Centralised Unit (CU). Thereby the radio access control device 106 can operate as part of a 5G network and/or as part of an Open RAN architecture. In some examples, the radio access control device can operate in accordance with one or more standards, for example from 3GPP, ITU, O-RAN ALLIANCE and/or Small Cell Forum. Thereby interoperability with other devices and networks can be ensured.

The scheduler devices 108 are operable to schedule networking operations of the radio devices 110 to which they are connected. In particular, the scheduler devices 108 manage radio communication (e.g. frequencies, time slots, and/or transmission power) to one or more user devices 112 connected to the one or more radio devices 110. In some examples, a scheduler device comprises a Distributed Unit (DU). Thereby the scheduler devices 108 can operate as part of a 5G network and/or as part of an Open RAN architecture. In some examples, the scheduler device can operate in accordance with one or more standards, for example from 3GPP, ITU, O-RAN ALLIANCE and/or Small Cell Forum. Thus, interoperability with other devices and networks can be ensured. Scheduler devices 108 may in some examples be virtualised in a virtualisation environment and may thus be considered scheduler instances (for example virtualised as one or more virtual machines). In some cases, the scheduler devices/instances may be remote from the radio devices and connected thereto by a network connection. For example, the scheduler devices 108 may be provided in a cloud computing server or arrangement.

The radio devices 110 act to handle radio frequency (RF) transmission and reception to user devices 112. In examples, the radio devices 110 are MNO radio devices, able to operate on multiple frequency bands and for one or more mobile network operators. Thus, the radio devices 110 may be multi-MNO radio devices. It will be appreciated that the radio devices 110 may be able to support multiple MNOs and also NH networks simultaneously. In some cases, each radio device may comprise multiple radios, each radio able to provide a user device with connectivity to a certain frequency band. For example, each radio device may be able to provide connectivity via three or four or more different frequency bands. In some examples, each of the plurality of radio devices comprise one or more Radio Units (RU). Thereby the radio devices 110 can operate as part of a 5G network and/or as part of an Open RAN architecture. In some examples, the radio device can operate in accordance with one or more standards, for example from 3GPP, ITU, O-RAN ALLIANCE and/or Small Cell Forum. Thus, interoperability with other devices and networks can be ensured.

A comparative example illustrating a potential peak handover rate caused by simultaneous handover of user devices from multiple MNOs will now be described with reference to figure 2. It will be appreciated here and throughout that while reference is made to MNO networks, the same applies to telecommunications networks more generally, and also MNO and/or NH networks. Thus, while some figures show different MNO clusters and describe handover between different MNO clusters, the same applies to different telecommunications network clusters and handover between different telecommunications network clusters.

Figure 2 shows a linear arrangement of TRPs 202 (TRP A to TRP T, also referred to herein as radio devices), each having three frequency bands 204. Figure 2 also shows a railway 206 as a linear deployment, which the TRPs 202 are arranged along, and a train 208 traversing the railway 206 in the direction of arrow A.

Figure 2 also shows MNO clusters 210 (MNO 1 cluster to MNO 4 cluster) in a repeating arrangement along the railway 206. The MNO clusters 210 represent the different MNOs supported by the TRPs. In particular, looking at TRPs A to H, these TRPs support MNO clusters 1 to 4 (i.e. each of the TRPs is configured to support the four MNOs at a given time). Then, TRPs I to P support a second arrangement of MNO clusters 1 to 4, etc.

The cluster boundaries 212 between the MNO clusters 210 are indicated by the vertical dashed lines. As discussed above, the cluster boundaries indicate the point at which a handover process is required to be performed as a user device transfers connectivity from a first cluster (such as MNO 1 cluster left of cluster boundary 212) to a second cluster (such as the second MNO 1 cluster right of the cluster boundary 212).

When user devices traverse the railway 208 (because the users of the user devices are travelling on the train for example), for all MNOs (i.e. MNOs 1 to 4 shown in figure 2), the user devices experience the cluster boundaries 212 at substantially the same point in time and space. As discussed above, handover processes require a certain amount of computing resources to be performed, and thus, when a large number of user devices all attempt to perform handover processes at substantially the same time, an increased demand is placed on the network infrastructure and computing resources supporting the network to facilitate the concurrent handover. This can result in requiring increased computing resources or network infrastructure to support the increased demand, or a reduction in the quality of service experienced by the user devices, such as temporary drop-outs or connectivity failures.

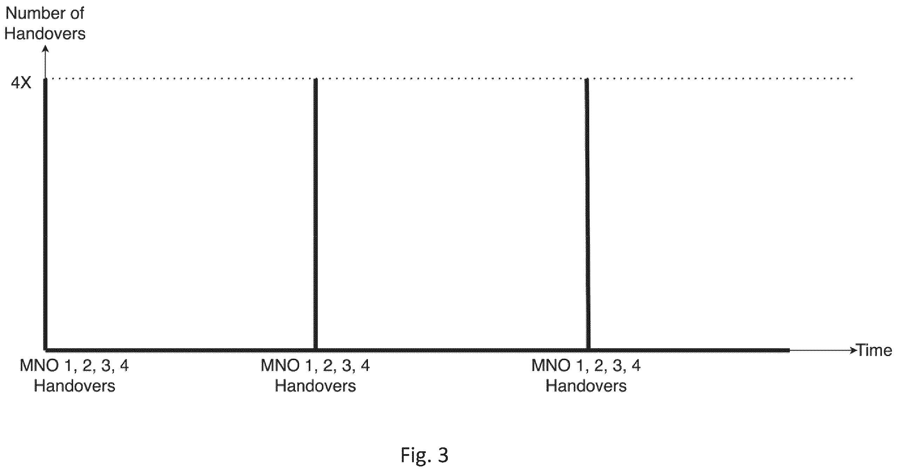

Figure 3 illustrates this peak handover rate. Figure 3 shows a graph of number of handovers against time for the comparative example shown in figure 2. As shown in figure 3, peaks in the number of handovers occur at three points, which coincide in time to the cluster boundaries 212 of figure 2. At these points in time, handover processes for all of MNO 1, MNO 2, MNO 3, and MNO 4 are performed. This results in the number of handovers being performed being 4 times larger than if handover processes for MNO 1, MNO 2, MNO 3, and MNO 4 were performed at different times (shown by 4X on the y-axis of the graph of figure 3).

It will be appreciated that while figure 2 illustrates a railway as a linear deployment and multiple MNOs, peak handover rates such as those described in relation to figures 2 and 3 can be experienced with other linear deployments (such as a roadway, an air corridor, a beach front, etc.), and for multiple frequency bands rather than multiple MNOs.

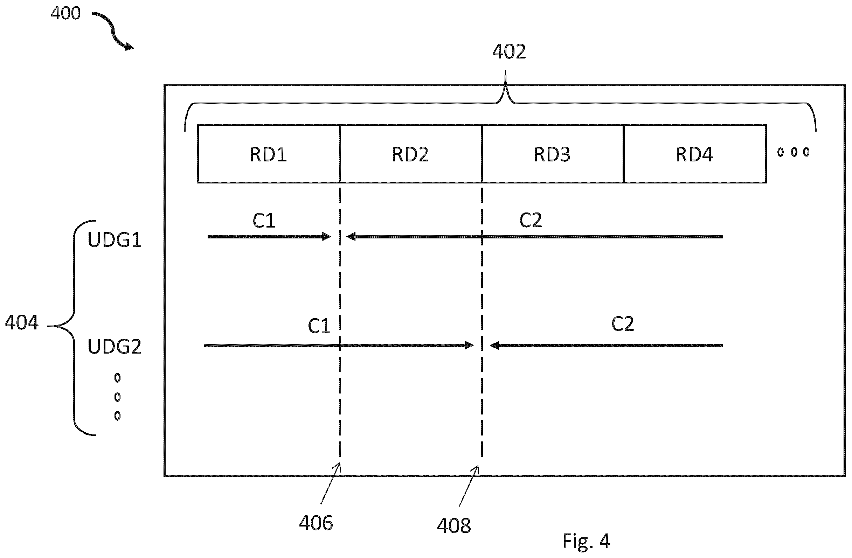

Figure 4 shows a telecommunication radio device arrangement 400 according to the teachings of the disclosure.

As shown in figure 4, telecommunication radio device arrangement 400 includes a plurality of radio devices 402 for providing a plurality of user device groups with connectivity to one or more MNO networks. The plurality of radio devices 402 may correspond to radio devices 110 of figure 1. The plurality of radio devices 402 may provide connectivity via two or more frequency bands (such as three frequency bands). While figure 4 shows telecommunication radio device arrangement 400 as including four radio devices 402, it will be appreciated that the number of radio devices may vary, and in some examples may be 8 or 16 in particular. As also shown in figure 4, the plurality of radio devices 402 may be linearly arranged or arranged along a line within telecommunication radio device arrangement 400. While figure 4 shows radio devices 402 arranged along a straight line, it will be appreciated that the radio devices 402 may be arranged along a curved line, or that a subset of the radio devices 402 may be linearly arranged (i.e. not all radio devices of the plurality of radio devices may be arranged in a straight or curved line).

As shown in figure 4, a plurality of user device groups 404 are defined (only two are shown here for clarity but the number may be two or more). Each user device group of user device groups 404 includes one or more user devices. The user device groups may be defined on the basis of the MNO or frequency band that the user devices are associated with, for example. In this way, UDG1 may include user devices that are associated with MNO 1, UDG2 may include user devices that are associated with MNO 2, etc.

As also shown in figure 4, first and second clusters of radio devices, C1, and C2, are defined for each of the first user device group UDG1 and the second user device group UDG2 (for clarity the first clusters for both user device groups are labelled C1, but this may instead be C3 for the second group etc.). For UDG1, the first cluster C1 includes radio device RD1, and the second cluster C2 includes radio device RD2, RD3, and RD4. Thus, for UDG1, a cluster boundary is present between C1 and C2 (i.e. between RD1 and RD2), as shown by cluster boundary 406. At this cluster boundary 406, user devices in UDG1 are to perform a handover process (such as a 3GPP handover process) in order to maintain their connection to the one or more MNO networks via RD1 and then RD2. This is because RD1 and RD2 are in different clusters and are thus scheduled by different scheduling devices. Conversely, when user devices in UDG1 are transferred between RD2, RD3, and RD4, no such handover process is required, because as discussed above, all of RD2, RD3, and RD4 are scheduled by the same scheduler device.

For UDG2, a cluster boundary is also present between C1 and C2, as shown by cluster boundary 408, but this cluster boundary is between RD2 and RD3. At this cluster boundary 408, user devices in UDG2 are to perform a handover process (such as a 3GPP handover process) in order to maintain their connection to the one or more MNO networks via RD2 and then RD3. This is because, for user devices in UDG2, RD2 and RD3 are in different clusters and are thus scheduled by different scheduling devices. Conversely, when user devices in UDG1 are transferred between RD1, and RD2 and separately RD3, and RD4, no such handover process is required, because as discussed above, RD1 and RD2, and separately RD3 and RD4 are scheduled by the same scheduler devices.

Thus, as shown in figure 4, cluster boundaries 406 and 408 are physically offset from each other. As a result, user devices of the different user device groups UDG1 and UDG2, will participate in a handover process at different, temporally staggered times. For example, as a result of relative motion between the user devices and the radio device, the user devices of UDG1 will participate in a handover process at a first time, as they transfer from cluster C1 to cluster C2, and at a later, subsequent, time, user devices of UDG2 will participate in a handover process as they transfer from cluster C1 to cluster C2.

Thus, as discussed above, boundaries between clusters of radio devices for different user device groups are physically offset from each other within the radio device arrangement. As a result, the different user device groups will participate in handover processes at different, staggered, times, thereby reducing the maximum peak handover rate. Consequently, the amount of control and signalling required for handover at any given time is also reduced. As a result, the network infrastructure and computing resources required to support the network can be reduced as the peak handover rate is reduced, resulting in reduced complexity, reduced power consumption, reduced processing requirements, and reduced cost. Furthermore, the scalability of the network and computing infrastructure is increased as the amount of computing resource required for a given radio device arrangement can be reduced.

While figure 4 has been shown as an example involving two clusters for each of two user device groups and having two cluster boundaries, it will be appreciated that the above applies for any number in a plurality of clusters and/or user device groups and/or cluster boundaries. Indeed, the number of clusters in a given radio device arrangement is not particularly limited. Further, in some implementations, the clusters may have a different number of radio devices or the same number of radio devices. Indeed, in some implementations, for a first user device group, each cluster may have the same number of radio devices, and for a second user group, each cluster may have a different number of radio devices. Again, this may vary depending on specific use-case and is configurable and scalable depending on implementation.

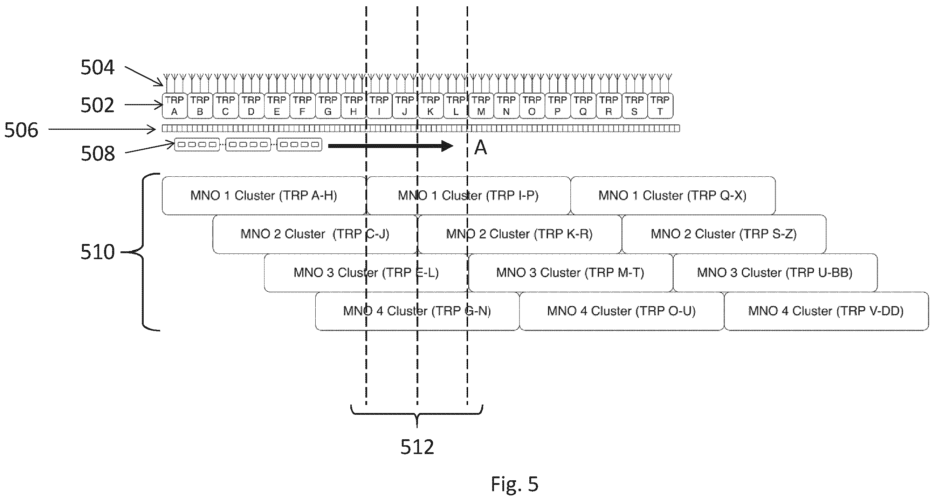

Figure 5 shows a similar linear deployment to the example of figure 2, but illustrates how the teachings of the present disclosure and in particular the arrangement of figure 4 reduces the peak handover rate. Figure 5 shows a linear arrangement of TRPs 502 (TRP A to TRP T), each having three frequency bands 504. Figure 5 also shows a railway 506 as a linear deployment, which the TRPs 502 are arranged along, and a train 508 traversing the railway 506 in the direction of arrow A.

Figure 5 also shows MNO clusters 510 (MNO 1 cluster to MNO 4 cluster) in a repeating arrangement along the railway 506. The cluster boundaries 512 between the MNO clusters 510 are indicated by the vertical dashed lines (only three are shown for simplicity). As can be seen from figure 5, and in contrast to figure 2, the cluster boundaries 510 for each of MNO 1 cluster, MNO 2 cluster, MNO 3 cluster, and MNO 4 cluster are staggered. In other words, these cluster boundaries do not occur at substantially the same point in time or space in figure 5, whereas in figure 2 they did.

Thus, when user devices traverse the railway 508 (because the users of the user devices are travelling on the train for example), for all MNOs (i.e. MNOs 1 to 4 shown in figure 5), the user devices experience the cluster boundaries 512 at temporally staggered times, as a result of physically offsetting the cluster boundaries. Accordingly, the different user device groups will participate in handover processes at different, staggered, times, thereby reducing the maximum peak handover rate. Consequently, the amount of control and signalling required for handover at any given time is also reduced. This provides a number of advantages, as discussed above.

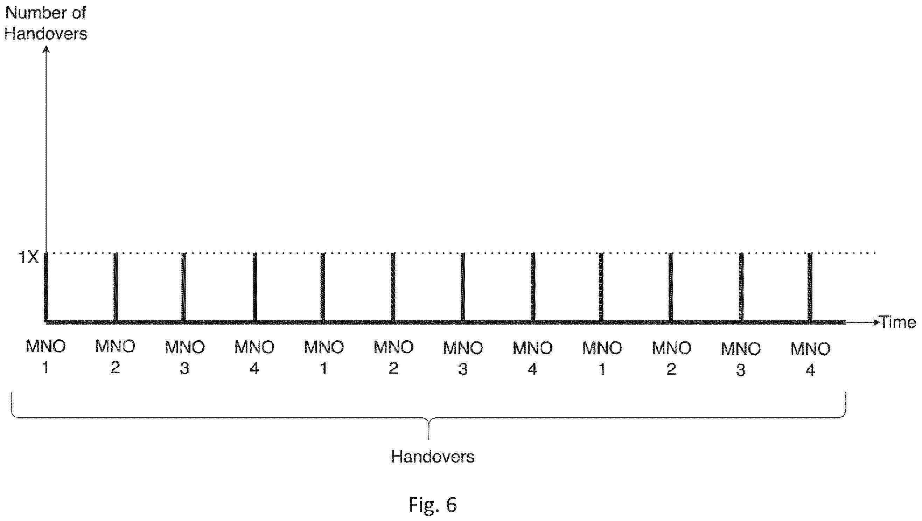

Figure 6 illustrates the relationship of number of handovers and time for the example of figure 5. As can be seen from figure 6, the peaks correspond to the points in time at which the handover processes take place, i.e. the cluster boundaries 512 shown in figure 5 (shown for more cluster boundaries than in figure 5).

Thus, as a result of physically offsetting the cluster boundaries and temporally staggering the handover processes, the peak handover rate is 1X, as opposed to 4X for the previously aligned clusters shown in figure 3. In other words, as a result of physically offsetting the cluster boundaries and temporally staggering the handover processes, the peak handover rate can be reduced by a half or more. This allows for a reduction in the network infrastructure and computing resources required to support the network as the peak handover rate is reduced, and also reduces complexity, power consumption, processing requirements, and cost. Furthermore, the scalability of the network and computing infrastructure is increased as the amount of computing resource required for a given radio device arrangement can be reduced as a result of the reduction in the processing power required to support handover processes.

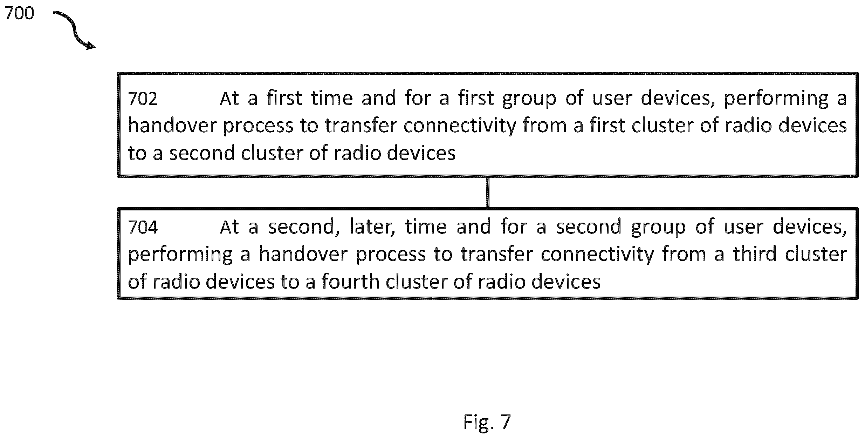

A method 700 for performing handover by a telecommunication radio device arrangement as detailed herein will now be described with reference to figure 7. Method 700 may be performed by the telecommunication radio device arrangement 400 of figure 4, for example. Method 700 may be performed by a combination of a telecommunication radio device arrangement and one or more scheduler devices and a centralised controller.

Method 700 includes steps 702 and 704. Step 702 includes, at a first time and for a first group of user devices, performing a handover process to transfer connectivity from a first cluster of radio devices to a second cluster of radio devices. Step 704 includes, at a second, later, time and for a second group of user devices, performing a handover process to transfer connectivity from a third cluster of radio devices to a fourth cluster of radio devices. In some examples, performing a handover process may mean participating in a handover process or facilitating a handover process (i.e. in examples where the telecommunication radio device arrangement performs the handover process in combination with one or more other devices, such as one or more scheduler devices and/or a centralised controller).

Thus, the handover processes for user devices of the first and second groups of user devices are temporally staggered so as to reduce the peak overall handover at any given time. As discussed herein, this allows for a reduction in the computing resources and infrastructure required to support the network(s) and handover processes.

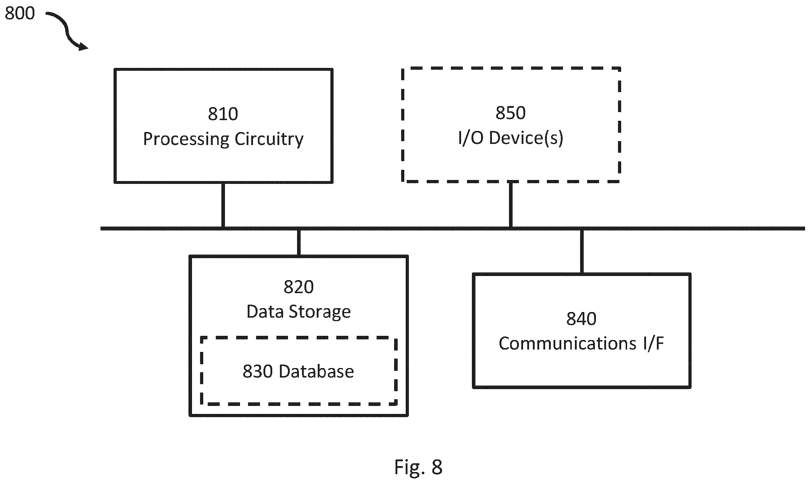

Figure 8 schematically illustrates an example of an electronic device 800 which can be used to implement teachings described above, including method 700.

The electronic device 800 has processing circuitry 810 for performing data processing in response to program instructions and data storage 820 for storing data and instructions to be processed by the processing circuitry 810. In some examples, the processing circuitry 810 includes one or more caches for caching recent data or instructions. The data storage 820 may have a database 830 which can, for example, store cluster information and/or information relating to the allocation of user devices to user device groups. The device further includes a communication interface 840 which can be used, for example, to obtain/receive cluster information and information relating to the allocation of user devices to user device groups, for example from one or more scheduler devices and/or a centralised controller can be used to send information relating to the user devices and radio devices to one or more scheduler devices and/or a centralised controller. It will be appreciated that Figure 8 is merely an example of possible hardware that may be provided in the device and other components may also be provided. The device 800 may additionally or alternatively be provided with one or more user input/output device(s) 850 to receive input from a user device (e.g. information relating to the user device MNO or frequency band allocation) or to output information (e.g. information relating to cluster allocations) to a user device.

The methods discussed above may be performed under control of a computer program executing on a device. Hence a computer program may comprise instructions for controlling a device to perform any of the methods discussed above. The program can be encoded in a computer-readable medium. A computer-readable medium may include non-transitory type media such as physical storage media including storage discs and solid state devices. A computer-readable medium may also or alternatively include transient media such as carrier signals and transmission media. A computer-readable storage medium is defined herein as a non-transitory memory device. A memory device includes memory space within a single physical storage device or memory space spread across multiple physical storage devices.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative teachings of the disclosure have been described in detail herein with reference to the accompanying drawings, it is to be understood that the invention is not limited to those precise teachings, and that various changes and modifications can be effected therein by one skilled in the art without departing from the scope and spirit of the invention as defined by the appended claims.

Further examples of feature combinations taught by the present disclosure are set out in the following numbered clauses:
1. A telecommunication radio device arrangement for linear deployments comprising:
   a plurality of radio devices for providing a plurality of user device groups with connectivity to one or more telecommunication networks, each user device group comprising one or more user devices; and
   for each user device group of the plurality of user device groups, the arrangement comprises:
      a first cluster comprising radio devices from the plurality of radio devices;
      a second cluster of radio devices comprising radio devices from the plurality of radio devices; and
      a boundary between the first cluster and second cluster where a handover process is performable to transfer connectivity of user devices from the first cluster to the second cluster,
   wherein the boundaries for different user device groups are physically offset from each other.
2. The telecommunication radio device arrangement of clause 1, wherein the same radio device is included in both a first cluster for a first user device group and a second cluster for a second user device group.
3. The telecommunication radio device arrangement of any preceding clause, wherein each radio device in a given cluster is operable to be scheduled by a same scheduling device.
4. The telecommunication radio device arrangement of clause 3, wherein the scheduling devices are remote from the radio device arrangement and connected thereto by a network connection.
5. The telecommunication radio device arrangement of any preceding clause, wherein the handover process comprises changing between scheduling devices, each scheduling device operable to schedule operation of the plurality of radio devices in a given cluster.
6. The telecommunication radio device arrangement of any preceding clause, wherein the handover process comprises a standard mobile telephony handover process, such as a 3GPP handover process.
7. The telecommunication radio device arrangement of any preceding clause, wherein connectivity between a user device and each radio device within a given associated cluster is transferable without performing a 3GPP handover process.
8. The telecommunication radio device arrangement of any preceding clause, wherein the clusters comprise at least two clusters having a different number of radio devices.
9. The telecommunication radio device arrangement of any preceding clause, wherein, for a first user device group, each cluster has the same number of radio devices, and for a second user group, each cluster has a different number of radio devices.
10. The telecommunication radio device arrangement of any preceding clause, wherein the plurality of radio devices forms a Co-operative Multi-Point deployment.
11. The telecommunication radio device arrangement of any preceding clause, wherein each user device group of the plurality of user device groups is associated with a different MNO.
12. The telecommunication radio device arrangement of any preceding clause, wherein each user device group of the plurality of user device groups is associated with a different frequency band of the plurality of radio devices.
13. The telecommunication radio device arrangement of any preceding clause, wherein each radio device provides connectivity via two or more frequency bands.
14. The telecommunication radio device arrangement of any preceding clause, wherein the plurality of radio devices comprise eight or more radio devices.
15. The telecommunication radio device arrangement of any preceding clause, wherein the linear deployments comprise a railway, a roadway, an air corridor, and a beach front.
16. The telecommunication radio device arrangement of any preceding clause, wherein the plurality of radio devices is configured to perform direct to cell communication from one or more low Earth orbit satellites or one or more high-altitude platform stations.
17. A system comprising:
   a plurality of telecommunication radio device arrangements according to any of clauses 1 to 16 arranged in a linear deployment; and
   a plurality of scheduling devices operable to schedule operation of the radio devices of the plurality of telecommunication radio device arrangements.
18. The system of clause 17, wherein the plurality of scheduling devices are remote from the plurality of telecommunication radio device arrangements and connected thereto by a network connection.
19. The system of clauses 17 to 18, wherein the plurality of telecommunication radio device arrangements are arranged along one of:
   a railway;
   a road;
   an air corridor; and
   a beach front.
20. A computer-implemented method for performing handover by a telecommunication radio device arrangement according to any of clauses 1 to 16, the method comprising:
   at a first time and for a first group of user devices, performing a handover process to transfer connectivity from a first cluster of radio devices to a second cluster of radio devices;
   at a second, later, time and for a second group of user devices, performing a handover process to transfer connectivity from a third cluster of radio devices to a fourth cluster of radio devices.
21. A computer-readable storage medium comprising instructions which, when executed by one or more processors, cause the one or more processors to perform the method of clause 20.

## Claims

1. A telecommunication radio device arrangement for linear deployments comprising:
a plurality of radio devices for providing a plurality of user device groups with connectivity to one or more telecommunication networks, each user device group comprising one or more user devices; and
for each user device group of the plurality of user device groups, the arrangement comprises:
a first cluster comprising radio devices from the plurality of radio devices;
a second cluster of radio devices comprising radio devices from the plurality of radio devices; and
a boundary between the first cluster and second cluster where a handover process is performable to transfer connectivity of user devices from the first cluster to the second cluster,
wherein the boundaries for different user device groups are physically offset from each other.

2. The telecommunication radio device arrangement of claim 1, wherein the same radio device is included in both a first cluster for a first user device group and a second cluster for a second user device group.

3. The telecommunication radio device arrangement of any preceding claim, wherein each radio device in a given cluster is operable to be scheduled by a same scheduling device.

4. The telecommunication radio device arrangement of claim 3, wherein the scheduling devices are remote from the radio device arrangement and connected thereto by a network connection.

5. The telecommunication radio device arrangement of any preceding claim, wherein the handover process comprises changing between scheduling devices, each scheduling device operable to schedule operation of the plurality of radio devices in a given cluster.

6. The telecommunication radio device arrangement of any preceding claim, wherein the handover process comprises a standard mobile telephony handover process, such as a 3GPP handover process.

7. The telecommunication radio device arrangement of any preceding claim, wherein connectivity between a user device and each radio device within a given associated cluster is transferable without performing a 3GPP handover process.

8. The telecommunication radio device arrangement of any preceding claim, wherein the clusters comprise at least two clusters having a different number of radio devices.

9. The telecommunication radio device arrangement of any preceding claim, wherein, for a first user device group, each cluster has the same number of radio devices, and for a second user group, each cluster has a different number of radio devices.

10. The telecommunication radio device arrangement of any preceding claim, wherein the plurality of radio devices forms a Co-operative Multi-Point deployment.

11. The telecommunication radio device arrangement of any preceding claim, wherein each user device group of the plurality of user device groups is associated with a different MNO.

12. The telecommunication radio device arrangement of any preceding claim, wherein each user device group of the plurality of user device groups is associated with a different frequency band of the plurality of radio devices.

13. The telecommunication radio device arrangement of any preceding claim, wherein the plurality of radio devices is configured to perform direct to cell communication from one or more low Earth orbit satellites or one or more high-altitude platform stations.

14. A computer-implemented method for performing handover by a telecommunication radio device arrangement according to any of claims 1 to 13, the method comprising:
at a first time and for a first group of user devices, performing a handover process to transfer connectivity from a first cluster of radio devices to a second cluster of radio devices;
at a second, later, time and for a second group of user devices, performing a handover process to transfer connectivity from a third cluster of radio devices to a fourth cluster of radio devices.

15. A computer-readable storage medium comprising instructions which, when executed by one or more processors, cause the one or more processors to perform the method of claim 14.
